# EUROPÄISCHE PATENTSCHRIFT

(11) **EP 0 655 936 B1**
(45) Veröffentlichungstag und Bekanntmachung des Hinweises auf die Patenterteilung: **12.05.1999**
(21) Anmeldenummer: 94918729.8
(22) Anmeldetag: 21.06.1994
(51) Int. Cl.: B01D 29/05

(54) **DRUCKFILTER**
PRESSURE FILTER
FILTRE SOUS PRESSION

(30) Priorität: 24.06.1993 DE 4320951
(43) Veröffentlichungstag der Anmeldung: 07.06.1995
(73) Patentinhaber: Maurer, Mike, D-58332 Schwelm (DE); Maurer, Uwe, D-58332 Schwelm (DE)
(72) Erfinder: MAURER, Uwe, D-58332 Schwelm (DE)
(74) Vertreter: Patentanwälte Hauck, Graalfs, Wehnert, Döring, Siemons
(86) Internationale Anmeldenummer: DE9400705
(87) Internationale Veröffentlichungsnummer: WO9500229

(56) Entgegenhaltungen:
- DE-A- 3 734 245
- DE-A- 3 833 807

## Beschreibung

Die vorliegende Erfindung betrifft ein Druckfilter mit den Merkmalen des Oberbegriffs des Patentanspruchs 1.

Ein aus der EP-A-0 479 077 bekanntes Druckfilter arbeitet mit einer kontinuierlichen Abreinigung der Filterfläche und ist insbesondere für die Abtrennung von Feststoffen aus Suspensionen bestimmt. Zum grundsätzlichen Aufbau eines solchen Druckfilters gehört eine Vielzahl druckfester Filterelemente, die den Fluidraum vom Filtratraum trennen und die Filterfläche bilden, sowie die an die Reject-Ableitung angeschlossene Rückspüleinrichtung mit einem Rückspülkopf, der einen Teil der Filterfläche gegenüber dem Fluidraum abdichtet. Der Rückspülkopf und die Filterfläche sind relativ zueinander bewegbar. Das zu filtrierende Fluid wird mit einem Druck p₁ dem Druckfilter zugeführt und steht im Fluidraum unter diesem Druck p₁ an den Filterelementen an. Das Filtrat läuft mit einem niedrigeren Druck p₂ aus dem Filtratraum ab. In der Reject-Ableitung sowie dem vom Rückspülkopf begrenzten Rückspülraum ist ein Druck p₃ einstellbar, der stets kleiner ist als der Druck p₂ im Filtratraum. Unter der Druckdifferenz zwischen dem Fluidraumdruck p₁ und dem Filtratraumdruck p₂ erfolgt eine Filtration, wobei an der Filterfläche Feststoffe abgeschieden werden und eine Deckschicht bilden. Diese Deckschicht wird kontinuierlich abgereinigt, und zwar durch eine Rückspülung, d.h. eine Umkehrung der Flußrichtung durch die Filterelemente. Die Rückspülung erfolgt an dem Teil der Filterfläche, der vom Rückspülkopf gegenüber dem Fluidraum abgedichtet wird, und zwar unter der Druckdifferenz zwischen dem Druck p₂ im Filtratraum und dem Druck p₃ im Rückspülraum. Der Filtrationsvorgang an der übrigen Filterfläche des Druckfilters wird durch die Rückspülung nicht beeinträchtigt.

Bei dem bekannten Druckfilter weist der Rückspülraum mindestens eine zur Filterfläche hin schlitzförmig offene Absaugkammer auf. Diese Absaugkammer ist als längliche, sich von einer zentralen Antriebswelle für den Rückspülkopf radial nach außen erstreckende Kammer ausgebildet, was ebenfalls für die schlitzförmige Öffnung zutrifft. Beim Drehen des Rückspülkopfes überstreicht daher die schlitzförmige Öffnung in Form eines vom Zentrum des Druckfilters ausgehenden radialen Strahles die Filterfläche. Es versteht sich, daß dabei die an unterschiedlichen radialen Punkten der Filterfläche angeordneten Öffnungen über unterschiedlich lange Zeiträume der schlitzförmigen Öffnung ausgesetzt sind bzw. dem entsprechenden Absaugvorgang unterzogen werden, da bei Drehung des Rückspülkopfes unterschiedliche Radialpunkte der schlitzförmigen Öffnung in der Zeiteinheit unterschiedliche Wege zurücklegen. Das hat zur Folge, daß die Filterfläche insgesamt durch das Rückspülen ungleichmässig gereinigt wird, so daß hierunter der Wirkungsgrad des Filters leidet, die Filterfläche frühzeitig verschleißt und/oder zusätzliche Stillegezeiten des Filters auftreten bzw. zusätzliche Wartungsmaßnahmen durchgeführt werden müssen.

Ein Druckfilter mit den Merkmalen des Oberbegriffs des Patentanspruchs 1 ist aus der DE-A-37 34 245 bekannt. Bei dem bekannten Filter sind zwei Filterelemente vorgesehen, zwischen denen eine Rückspülfunktionen übernehmende Schaufel angeordnet ist. Die Schaufel besitzt eine spiralförmige Gestalt. Sie hat einen Schlitz sowie elastische Manschetten, die einen abgeschlossenen Raum umgrenzen. Der Schlitz steht über eine Bohrung mit einem Spülflüssigkeitsablaufstutzen in Verbindung.

Bei diesem Druckfilter ist somit die Rückspüleinrichtung zwischen den beiden Filterelementen angeordnet. Über die Anordnung der beiden Manschetten kann daher zwischen den Filterelementen ein abgeschlossener Raum gebildet werden, der für die Rückspülfunktion erforderlich ist.

Der Erfindung liegt die Aufgabe zugrunde, ein Druckfilter der angegebenen Art, bei dem sich die Filterfläche durch Rückspülen besonders gleichmässig reinigen lässt, zu schaffen, das besonders gut gewartet werden kann.

Diese Aufgabe wird erfindungsgemäß bei einem Druckfilter der angegebenen Art durch die kennzeichnenden Merkmale des Patentanspruchs 1 gelost.

Die Erfindung realisiert eine Ausführungsform, bei der der Fluidraum axial außerhalb des Filterelmentes angeordnet ist. Hierbei wird der Rückspülkopf von mehreren spiralhalbbogenförmig ausgebildeten Hohlleisten gebildet, die von einer Trägerplatte mit Ausnehmungen zwischen den Hohlleisten getragen werden. Die Hohleisten werden elastisch gegen die axial äußere, zum Gehäuse benachbarte Seite des Filterelementes gedrückt.

Durch die Anordnung der Trägerplatte wird eine wesentliche Versteifung des Rückspülkopfes erreicht. Die Trägerplatte ist dabei so ausgebildet, daß sie zwischen den einzelnen Hohlleisten Ausnehmungen aufweist, um einen Kontakt des zu filtrierenden Fluids mit der Filterfläche zu ermöglichen.

Bei der erfindungsgemäßen Lösung wird sichergestellt, daß jeder Öffnung in der Filterfläche unabhängig von ihrer radialen Lage etwa die gleiche Reinigungszeit zukommt. Mit anderen Worten, die schlitzförmige Öffnung ist so ausgebildet, daß in der Zeiteinheit jeder radiale Punkt der schlitzförmigen Öffnung etwa die gleiche Wegstrecke überstreicht, wenn der Rückspülkopf zum Reinigen der Filterfläche in Drehungen versetzt wird. Hierdurch wird die Filterfläche über ihre gesamte Oberfläche gleichmäßig gereinigt, so daß das Filter über eine lange Betriebsdauer einen guten Wirkungsgrad besitzt und keine erhöhten Stillegezeiten bzw. zusätzliche Wartungsmaßnahmen erforderlich sind, um unzureichend gereinigte Bereiche der Filterfläche (beim Stand der Technik infolge der erhöhten Winkelgeschwindigkeit im äußeren Bereich) nachzureinigen.

Bei einer besonders bevorzugten Ausführungsform des Erfindung ist die schlitzförmige Öffnung in der Form eines Spiralhalbbogens von ca. 190° ausgebildet. Infolge der unterschiedlichen Krümmung einer Spirale, die vom Zentrum nach außen hin abnimmt, ergibt sich hierbei der erfindungsgemäß gewünschte Effekt, daß bei Weiterbewegung der spiralförmig ausgestalteten schlitzförmigen Öffnung einzelne Punkte der Öffnung in unterschiedlichen Radiallagen in der Zeiteinheit etwa gleiche Wege (Bogenmaß) durchlaufen, so daß sich die gewünschten etwa gleichen Reinigungszeiten für radial unterschiedlich angeordnete Öffnungen der Filterfläche ergeben. Die genaue Kurvenform der spiralförmigen bzw. sichelförmigen Öffnung kann ohne weiteres vom auf diesem Gebiet tätigen Fachmann ermittelt werden, wobei die Erfindung nicht auf eine spezielle Kurvenform beschränkt ist, wenn nur zumindest annäherungsweise der vorstehend aufgezeigte Effekt erreicht wird.

Eine weitere bevorzugte Ausführungsform der Erfindung zeichnet sich dadurch aus, daß die schlitzförmige Öffnung durch eine Vielzahl von spiralförmig angeordneten benachbarten linearen Einzelschlitzen gebildet ist. Bei dieser Ausführungsform ist somit keine durchgehende schlitzförmige Öffnung vorhanden, sondern diese durchgehende Öffnung ist in eine Vielzahl von Einzelschlitzen unterteilt, die durch Stege voneinander getrennt sind. Der Vorteil dieser Ausführungsform besteht darin, daß hierdurch die Fläche der schlitzförmigen Öffnung reduziert wird, wodurch sich eine bessere Festigkeit des Rückspülkopfes (verwindungssteifere Ausbildung) ergibt. Darüber hinaus lassen sich die linearen Einzelschlitze fertigungstechnisch einfacher herstellen. Beispielsweise kann die Breite der Schlitze mit einem Radialfräser in jeder gewünschten Breite ausgeführt werden. Die linearen Einzelschlitze sind so angeordnet, daß beim Drehen des Rückspülkopfes der gesamte Filterflächenbereich von den mit unterschiedlichen Anstellwinkeln angeordneten Einzelschlitzen überstrichen wird, wobei gleichzeitig gleichmäßige Reinigungszeiten für jede Öffnung der Filterfläche sichergestellt werden.

Die Reject-Ableitung vom Rückspülraum ist vorzugsweise durch eine Hohlwelle zum Antreiben des Rückspülkopfes und von dort aus dem Filter heraus geführt. Es versteht sich, daß die der schlitzförmigen Öffnung zugeordnete Absaugkammer so ausgebildet ist, daß eine einwandfreie Abführung des Rejects zur Hohlwelle hin erfolgt, wobei die Kammer in Anpassung an die schlitzförmige Öffnung vorzugsweise ebenfalls eine spiralförmige Krümmung besitzt. Bei der Ausführungsform mit den Einzelschlitzen steht die Absaugkammer lediglich über die Einzelschlitze mit der zu reinigenden Filterfläche in Verbindung.

Die Hohlleisten weisen vorzugsweise auf der der Filterfläche zugewandten Seite der Trägerplatte einen Absaugteil und auf der von der Filterfläche abgewandten Seite der Trägerplatte einen Reject-Ableitteil auf. Der Reject-Ableitteil stellt die Verbindung mit der Hohlwelle und der Reject-Ableitung her.

Die Erfindung wird nachfolgend anhand eines Ausführungsbeispiels in Verbindung mit der Zeichnung im einzelnen erläutert. Es zeigen:
- Figur 1: einen Vertikalschnitt durch ein erfindungsgemäß ausgebildetes Druckfilter;
- Figur 2: eine Ansicht des Druckfilters der Figur 1 mit entfernter Gehäusewand und teilweise entferntem Rückspülkopf sowie Filterelement;
- Figur 3: die Ansicht einer Hohlleiste des Rückspülkopfes von der Seite der Filterfläche her; und
- Figur 4: einen Schnitt entlang Linie A-A in Figur 3.

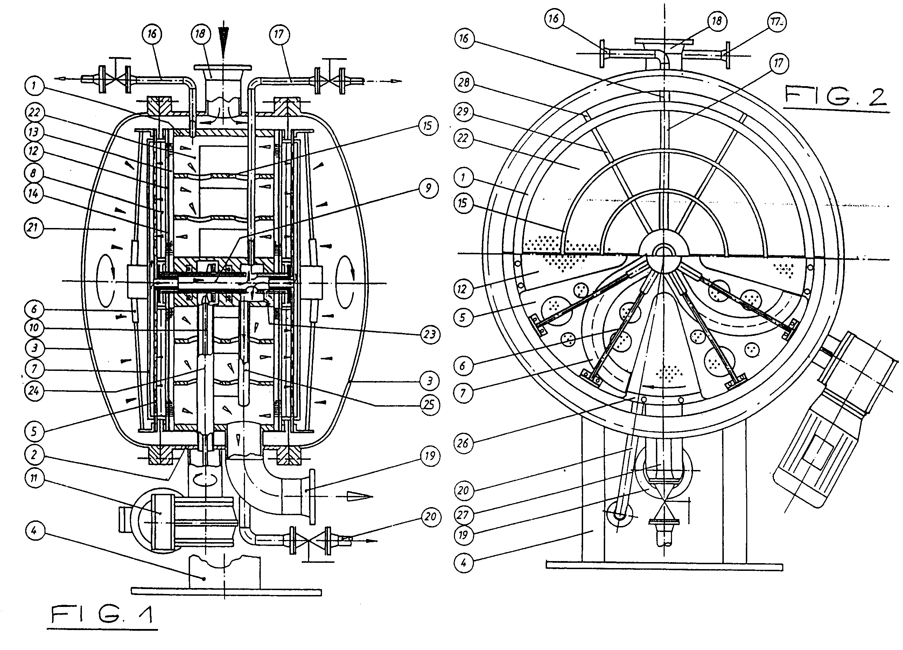

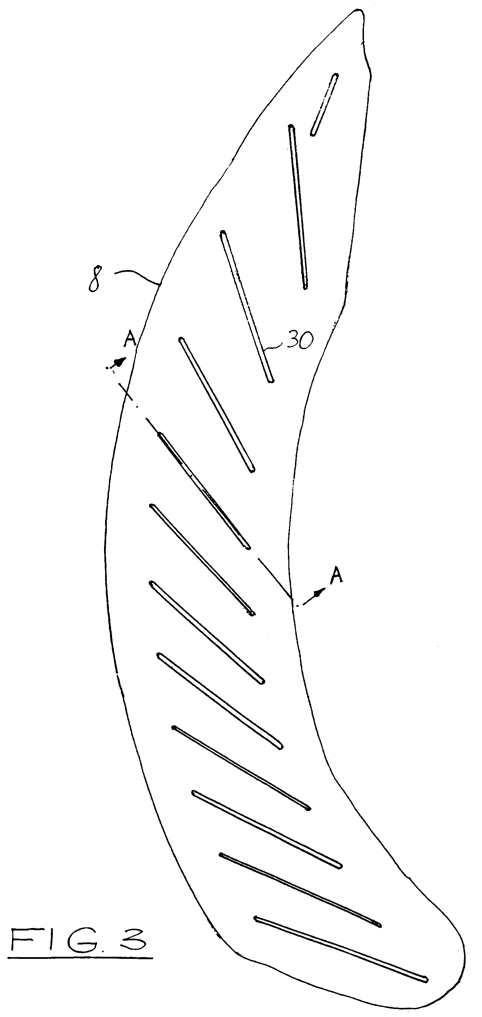

Das in den Figuren 1 und 2 dargestellte Druckfilter besitzt einen Tragring 1, an dessen Innenseite Stützringe 15 und Rippen 29 so miteinander verbunden sind, daß mittig eine Nabe 23 gehalten wird. Der Tragring 1 ist an seinen beiden offenen Seiten durch je ein kreisförmiges Filterelement 12 geschlossen, das sich aus einer ersten und zweiten Lochplatte 13 zusammensetzt, zwischen denen sich ein geeignetes Filtervlies aus textilem Material befindet. Diese Filterelemente bilden jeweils eine Filterfläche. Das ringförmige Gebilde aus dem Tragring 1 und den beiden Filterelementen 12 ist in einem Gehäuse 3 angeordnet, das eine Fluidkammer 21 bildet, die über einen Zulauf 18 mit dem zu filtrierenden Fluid versorgt wird. Innerhalb des ringförmigen Gebildes aus Tragring 1 und Filterelementen 12 befindet sich eine Filtratkammer, an die eine Filtratauslaßleitung 19 angeschlossen ist.

Durch die Nabe 23 erstreckt sich eine Hohlwelle 9, die an beiden Enden offen ist. Sie wird durch Gleitlager, Kugellager und Dichtungen geführt, die verhindern, daß Fluid in den Hohlwellenbereich gelangen kann. In die offenen- Enden der Hohlwelle 9 sind Übergangsstutzen gesetzt, die sich zusammen mit der Hohlwelle drehen. An diesen sich flanschförmig erweiternden Übergangsstutzen ist jeweils eine Trägerplatte 5 drehfest fixiert, die später im einzelnen beschrieben wird.

Das Innere der Hohlwelle steht mit einer Entlüftungsleitung 17 und mit einer Reject-Ableitung 25 in Verbindung. Beide Leitungen sind durch die Filtratkammer geführt und außerhalb des Druckfilters jeweils mit Absperrventilen (bei 20 gezeigt) versehen. Auch von der Filtratkammer führt eine Entlüftungsleitung 16, die ein geeignetes Absperrventil aufweist, aus dem Druckfilter heraus.

Das ringförmige Gebilde aus Tragring 1, den beiden Filterelementen 12 und den Stützringen 15 und Rippen 29 sowie die entsprechenden Leitungen 16, 17, 19, 25 sind stationär im Gehäuse 3 angeordnet.

Das Druckfilter weist zwei Rückspülköpfe auf, von denen jeder einem Filterelement 12 zugeordnet ist und dessen Filterfläche überstreicht. Die Rückspülköpfe bestehen aus einer Trägerplatte 5 und einer Vielzahl von spiralförmig gekrümmten Rückspülleisten 8, die an der Trägerplatte befestigt sind. Die Form der Rückspülleisten 8 ist in Figur 2 zu erkennen, wobei dort der über der Trägerplatte 5 befindliche Ableitteil 7 der Rückspülleisten gezeigt ist. Die Trägerplatte 5 weist zwischen den einzelnen Rückspülleisten 8 Ausnehmungen auf, damit Fluid aus der Fluidkammer 21 durch die Filterflächen in die Filtratkammer dringen kann. Elastische Einrichtungen 6 dienen dazu, die Trägerplatte gegen die Filterfläche vorzuspannen, so daß die Rückspülleisten 8 gleichmäßig gegen die äußere Lochplatte 13 gedrückt werden und auf dieser entlanggleiten.

Die Rückspülleisten 8 weisen in ihrem Inneren Absaugkammern auf und sind an ihrer der Filterfläche zugewandten Seite mit einer spiralförmig gekrümmten schlitzförmigen Öffnung versehen, mittels der der Rückspülvorgang durchgeführt wird. Über die spiralförmige schlitzförmige Öffnung wird die als Deckschicht auf der Filterfläche ausgebildete Substanz abgesaugt und durch in der Trägerplatte 5 ausgebildete Öffnungen dem Reject-Ableitteil 7 der Rückspülleisten Zugeführt, von wo aus das Reject radial nach innen in die Hohlwelle 9 und von dort über die Reject-Ableitung 25 aus dem Druckfilter herausgelangt.

Der Antrieb der Rückspülköpfe erfolgt über die Hohlwelle 9, die auf ihrer Außenseite mit einem Tellerrad verbunden ist, das mit einem Kegelrad einer Antriebswelle 10 kämmt, welche in einem durch die Fluidkammer und Filtratkammer geführten Rohr 24 angeordnet ist. Die Antriebswelle 10 wird über einen geeigneten Antriebsmotor 11 in Drehungen versetzt. Das ganze Druckfilter ist auf einem geeigneten Gestell 4 angeordnet.

Die Rückspülleisten 8 des Rückspülkopfes sind spiralförmig bzw. sichelförmig ausgebildet und weisen eine spiralförmig oder sichelförmig ausgebildete schlitzförmige Öffnung auf ihrer der Filterfläche benachbarten Seite auf. Durch diese Ausbildung wird gewährleistet, daß jede Bohrung in den Lochplatten die gleiche Reinigungszeit hat, unabhängig davon, welche Radiallage sie auf dem Filterelement einnehmen.

Um zu verhindern, daß Querströmungen in den Rückspülleisten die Menge des Rejectes erhöhen oder ein sauberes Abreinigen stören, sind die Rückspülleisten elastisch gelagert und passen sich leichten Unebenheiten der Lochplatten an. Hierzu dienen die elastischen Einrichtungen 6.

Um ein kontinuierliches Abreinigen zu gewährleisten, ist es erforderlich, daß die Drehgeschwindigkeit der Trägerplatten 5 mit den Rückspülleisten kontinuierlich geregelt werden kann, was über den Elektromotor 11 mit vorgelagertem Getriebe geschieht.

Nachfolgend wird die Funktionsweise des Druckfilters der Figuren 1 und 2 erläutert.

Die Fluidkammer 21 wird über den Zulauf 18 mit zu filtrierendem Fluid gefüllt. Vorher werden die entsprechenden Kammern über die Leitungen 16, 17 sowie eine entsprechende Einrichtung in der Zulaufleitung 18 entlüftet. Durch die geschlossene Reject-Auslaufleitung 19 wird ein Druck von mindestens 2 bar in der Anlage aufgebaut. Durch automatische Regelung eines Auslaufventiles wird der Druck in der Filtratkammer 22 konstant gehalten. Durch Verunreinigung des Filtervlieses erhöht sich der Druck in der Fluidkammer. Bei Erreichen eines vorgegebenen Druckes werden die Trägerplatten 5 des Rückspülkopfes in Bewegung gesetzt und rotieren über die Lochplatten 13. Infolge des Druckunterschiedes zwischen den Absaugkammern in den Rückspülleisten 8 und der Filtratkammer 22 strömt jetzt sauberes Fluid von der Filtratkammer durch die Vliese 14 und die schlitzförmigen Öffnungen der Rückspülleisten 8 in deren Reject-Ableitteil 7 und von dort in die Hohlwelle 9 sowie durch die Leitung 25 aus dem Filter heraus.

Bei der in den Figuren 1 und 2 dargestellten Ausführungsform sind die Rückspülleisten mit ihrem Absaugteil 8 und ihrem Ableitteil 7 sichelförmig bzw. spiralförmig ausgebildet, wobei auch die an der der Filterfläche zugewandten Seite des Absaugteils 8 der Rückspülleiste angeordnete schlitzförmige Öffnung eine entsprechende sichelförmige bzw. spiralförmige Gestalt besitzt. Figur 3 zeigt eine Ausführungsform einer Rückspülleiste, bei der die Absaugkammer bzw. der Absaugteil 8 der Leiste ebenfalls sichelförmig bzw. spiralförmig ausgebildet ist. Hierbei ist jedoch auf der der Filterfläche zugewandten Fläche keine durchgehende spiralförmige und schlitzförmige Öffnung vorgesehen, sondern statt dessen eine Vielzahl von linearen Einzelschlitzen 30, die ebenfalls sichelförmig bzw. spiralförmig angeordnet sind und unterschiedliche Anstellwinkel aufweisen. Mit diesen Schlitzen wird ebenfalls erreicht, daß jede Öffnung der Lochplatte, unabhängig von ihrer Radiallage, eine gleiche Reinigungszeit aufweist, wobei allerdings bei dieser Ausführungsform die Rückspülleiste insgesamt steifer ausgebildet ist und sich fertigungstechnische Vorteile ergeben.

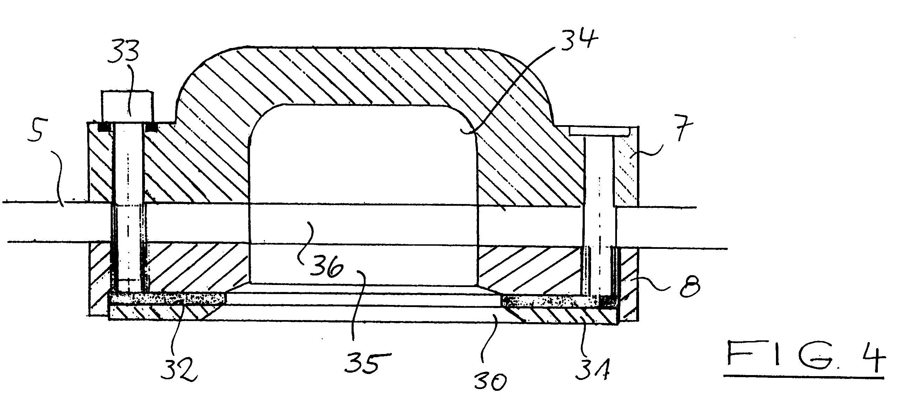

Figur 4 zeigt einen Schnitt entlang Linie A-A in Figur 3. Man erkennt die Trägerplatte 5, über der der Ableitteil 7 und unter der der Absaugteil 8 der Rückspülleiste angeordnet ist. Die an der Unterseite des Absaugteils 8 angeordnete schlitzförmige Öffnung 30 verengt sich zur Trägerplatte hin in eine Absaugkammer 35, die über eine Öffnung 36 in der Trägerplatte in einen Ableitkanal 34 übergeht, der zur Hohlwelle führt. An der der Filterfläche zugewandten Seite der Leiste ist eine Schwingplatte 31 angeordnet, die bei 32 elastisch gelagert ist. Die Leiste ist über geeignete Befestigungselemente 33 an der Trägerplatte montiert.

Figur 2 zeigt, daß die Trägerplatte 5 etwa malteserkreuzförmig ausgebildet ist. Um möglichst viel Filterfläche unbedeckt zu lassen, sind in der Trägerplatte neben den Rückspülleisten zusätzliche Öffnungen vorgesehen, so daß auch in diesem Bereich Fluid die Filterfläche erreichen kann.

## Patentansprüche

1. Druckfilter mit einem Fluidraum (21) mit einem Fluidzulauf (18), zwei eine Vielzahl von Öffnungen aufweisenden parallelen kreisförmigen Filterelementen (12), deren eine Seite vom Fluidraum (21) und deren andere Seite von einem Filtratraum begrenzt ist, der einen Filtratablauf (19) aufweist, und einer Rückspüleinrichtung mit einem das Filterelement (12) überstreichenden und einen Teil des Filterelementes (12) gegenüber dem Fluidraum (21) abdichtenden Rückspülkopf, der einen Rückspülraum begrenzt, welcher eine Absaugkammer mit einer zum Filterelement (12) hin schlitzförmigen Öffnung aufweist und an den eine Reject-Ableitung (25) angeschlossen ist, so daß jede Öffnung des Filterelementes (12) unabhängig von ihrer radialen Lage etwa in der gleichen Zeitdauer von der schlitzförmigen Öffnung überstrichen wird, dadurch gekennzeichnet, daß der Rückspülkopf von mehreren spiralhalbbogenförmig ausgebildeten Hohlleisten (8) gebildet ist, die von einer Trägerplatte (5) mit Ausnehmungen zwischen den Hohlleisten (8) getragen werden, daß der Fluidraum (21) axial ausserhalb des Filterelementes (12) angeordnet ist und daß die Hohlleisten (8) elastisch gegen die axial äußere, zum Gehäuse (3) benachbarte Seite des Filterelementes (12) gedrückt werden.

2. Druckfilter nach Anspruch 1, dadurch gekennzeichnet, daß die schlitzförmige Öffnung in der Form eines Spiralhalbbogens von ca. 190 ° ausgebildet ist.

3. Druckfilter nach Anspruch 1, dadurch gekennzeichnet, daß die schlitzförmige Öffnung durch eine Vielzahl von spiralförmig angeordneten benachbarten linearen Einzelschlitzen (30) gebildet ist.

4. Druckfilter nach einem der vorangehenden Ansprüche, dadurch gekennzeichnet, daß die Reject-Ableitung vom Rückspülraum durch eine Hohlwelle (9) zum Antreiben des Rückspülkopfes und von dort aus dem Filter herausgeführt ist.

5. Druckfilter nach einem der vorangehenden Ansprüche, dadurch gekennzeichnet, daß die Hohlleisten (8) auf der der Filterfläche zugewandten Seite der Trägerplatte (5) einen Absaugteil und auf der von der Filterfläche abgewandten Seite der Trägerplatte (5) einen Reject-Ableitteil (7) aufweist.

## Claims

1. A pressure filter comprising a fluid compartment (21) with a fluid inlet (18), two parallel circular filter elements (12) having a plurality of apertures and having one side restricted by the fluid compartment (21) and another side restricted by a filtrate compartment, the filtrate compartment having a filtrate outlet (19), and a backwashing means with a backwashing head sweeping over the filter element (12) and sealing a part of the filter element (12) with respect to the fluid compartment (21), the backwashing head restricting a backwashing compartment having a suction chamber with a slot-like opening open to the filter element (12) and having connected thereto a reject drain (25) so that each aperture of the filter element (12), independent of its radial position, is swept over by the slot-like opening in approximately the same period of time, characterized in that the backwashing head is formed by a plurality of hollow slats (8) formed as a semi-arc of a helix and carried by a carrier plate (5) with recesses between the hollow slats (8), that the fluid compartment (21) is disposed axially outside of the filter element (12), and that the hollow slats (8) are resiliently pressed against the axially outer side of the filter element (12) adjacent to the housing (3).

2. The pressure filter according to claim 1, characterized in that the slot-like opening has the form of a semi-arc of a helix of about 190°.

3. The pressure filter according to claim 1, characterized in that the slot-like opening is formed by a plurality of helically disposed and adjacent linear single slots (30).

4. The pressure filter according to one of the preceding claims, characterized in that the reject drain from the backwashing compartment extends through a hollow shaft (9) for driving the backwashing head and from there out of the filter.

5. The pressure filter according to one of the preceding claims, characterized in that the hollow slats (8) have a suction part on the side of the carrier plate (5) adjacent to the filter surface and a reject drain part (7) on the side of the carrier plate facing away from the filter surface.

## Revendications

1. Filtre-presse comportant un espace à fluide (21) présentant une entrée de fluide (18), deux éléments de filtrage (12) parallèles, circulaires, présentant une pluralité d'ouvertures et dont un côté est délimité par l'espace à fluide (21) et l'autre côté par un espace à filtrat qui présente une sortie de filtrat (19), et comportant un dispositif de rinçage présentant une tête de rinçage qui balaie l'élément de filtrage (12), qui rend étanche une partie de l'élément de filtrage (12) par rapport à l'espace à fluide (21) et qui limite un espace de rinçage qui présente une chambre d'aspiration comportant une ouverture en forme de fente vers l'élément de filtrage (12) et auquel est raccordée une conduite de dérivation de rejets (25), de sorte que chaque ouverture de l'élément filtrant (12) est balayée, indépendamment de sa position radiale, approximativement dans la même durée que celle pour l'ouverture en forme de fente,
***caractérisé an ce que*** la tête de rinçage est formée par plusieurs barres creuses (8) qui sont réalisées en forme de demi-arc de spirale et qui sont portées par une plaque porteuse (5) présentant des évidements entre les barres creuses (8), en ce que l'espace à fluide (21) est agencé axialement à l'extérieur de l'élément de filtrage (12) et en ce que les barres creuses (8) sont pressées élastiquement contre le côté axialement externe, voisin du caisson (3), de l'élément de filtrage (12).

2. Filtre-presse suivant la revendication 1, caractérisé en ce que l'ouverture en forme de fente est réalisée sous la forme d'un demi-arc de spirale d'approximativement 190 degrés.

3. Filtre-presse suivant la revendication 1, caractérisé en ce que l'ouverture en forme de fente est formée par une pluralité de fentes séparées (30) linéaires, voisines, agencées en forme de spirale.

4. Filtre-presse suivant l'une des revendications précédentes, caractérisé en ce que la conduite de dérivation de rejets est amenée depuis l'espace de rinçage, à travers un arbre creux (9) pour l'entraînement de la tête de rinçage, et de là hors du filtre.

5. Filtre-presse suivant l'une des revendications précédentes, caractérisé en ce que les barres creuses (8) présentent, sur le côté de la plaque porteuse (5) tourné vers la surface de filtrage, un élément d'aspiration et, sur le côté de la plaque porteuse (5) tourné à l'écart de la surface de filtrage, un élément de dérivation de rejets (7).
